# EUROPEAN PATENT SPECIFICATION

(11) **EP 0 734 543 B1**
(45) Date of publication and mention of the grant of the patent: **08.06.2005**
(21) Application number: 95905900.7
(22) Date of filing: 07.12.1994
(51) Int. Cl.: G02C 7/04, G02C 7/08, G02C 7/06

(54) **ALIPHATIC THERMOPLASTIC POYURETHANE PRESS-ON LENSES AND EYEGLASSES EMBODYING THE SAME**
SELBSTHAFTENDE LINSEN AUS ALIPHATISCHEM THERMOPLASTISCHEM POLYURETHAN UND BRILLE, DIE DIESE VERWENDET
VERRES ADHERANT PAR PRESSION FABRIQUES EN POLYURETHANNE THERMOPLASTIQUE ALIPHATIQUE ET LUNETTES INCORPORANT DE TELS VERRES

(30) Priority: 07.12.1993 US 163678
(43) Date of publication of application: 02.10.1996
(73) Proprietor: VSI INTERNATIONAL, LLC, Miramar, Florida 33025 (US)
(72) Inventor: LA HAYE,Peter G., Medina, Washington 98039 (US)
(74) Representative: Prato, Roberto
(86) International application number: PCT/US1994/014271
(87) International publication number: WO 1995/016220

(56) References cited:
- EP-A- 0 329 389
- EP-A- 0 341 998
- FR-A- 2 689 654
- US-A- 3 195 145
- US-A- 3 628 854
- US-A- 3 904 281
- US-A- 4 079 160
- US-A- 4 547 049
- US-A- 4 645 317
- US-A- 5 153 619
- US-A- 5 243 366
- US-A- 5 266 977
- US-A- 5 349 393

## Description

### BACKGROUND OF INVENTION AND PRIOR ART

### Field of Invention

Injection-molded aliphatic polyurethane press-on lenses and eyeglasses embodying the same, wherein the lenses are of optical clarity and can be adhered to usual sunglass or other plano lenses by virtue of their autogenous adhesive properties, that is, adherence between the sunglass or other plano lens and the lenses of the present invention is effected by the molecular surface adhesion between the lenses of the invention and the sunglass or other plano lens to which adhered.

### Prior Art

A search conducted in the relevant U.S. patent art in Class 351, Subclasses 44, 45, 46, 47, and 57, revealed U.S. Patent 3,628,854 of Jampolsky, dated December 21, 1971, for "FLEXIBLE FRESNEL REFRACTING MEMBRANE ADHERED TO OPHTHALMIC LENS" and Philipson U.S. Patent 4,079,160 of March 14, 1978, entitled "ABRASION-RESISTANT OPTICAL ELEMENT". Whereas the first of these references recognized the fact that certain different polymers possess autogenous adhesive properties which enable membranes thereof to be stuck by mere finger pressure to the surface of an optical lens, it did not contemplate lenses which are injection molded from any such self-adherent polymeric material which are characterized by truly optical corrective or enlargement properties, so that a magnifying or reader-type set of eyeglasses, or a set of eyeglasses embodying corrective lenses, could be produced by the simple pressed-on adherence of the lens to the surface of a sunglass lens or other simple plano lens having no correction itself, to provide simply and expediently, a set of "reader" glasses or glasses comprising corrective lens elements in a most facile and economic manner. The second of these reference patents, although employing an aliphatic polyurethane, among many different polymeric substrates which are disclosed as being utilizable for the production of a hard abrasion-resistant coating on optical surfaces, as present in a pair of eyeglasses, did not contemplate or suggest the production of a press-on lens having truly optical or magnification characteristics from such type polymer or any other.

Other references turned up in the search, or which were cited against the Jampolsky patent, were found to be of little if any relevance, these including Mercer USP 3,033,359, which discloses the employment of Saran™ for temporarily attaching shields to optical lenses by electrostatic attraction; Eriksson USP 4,898,459 which discloses releasably attaching opaque films to reading spectacles; Merton USP 2,248,638 which discloses sheet material having prismatic surfaces; Craig USP 2,511,329, which discloses a lens shield adhered to a lens by adhesive on one side of a thin flexible transparent sheet material (which is one of the known drawbacks of the known prior art since any adhesive affects the refraction of light penetrating any lens and lens shield); Pohl USP 2,884,833, an optical system for viewing pictures; Rühle USP 3,004,470, a multiple focal lens; and Lefferts USP 3,203,306, an optical ray concentrator. Foreign patents cited during prosecution of Jampolsky are French Patent 369,993, relating to protective goggles; published British Specification 717,775, relating to coloured viewers with areas of different colors so that an object viewed appears to be colored; and Swiss Patent 207,794, relating to a protective screen for eyeglasses and the like.

The polymeric membrane employed by Jampolsky is of vinyl butyrate, of which thicknesses in excess of one-sixteenth of an inch (1 inch = 25.4 mm) are not recommended, and the most significant disclosure of this patent is clearly the presence of a Fresnel refracting surface which refracts light rays transmitted through an ophthalmic lens and the membrane of Jampolsky to the eye in a manner enabling diagnosis and treatment of a disorder of the eye. As to the Philipson patent, it suggests nothing more than a hard protective lens coating.

Thus, so far as can be ascertained by the present applicant, there is no disclosure or suggestion of the present invention in the known prior art.

Examples of injection-molded aliphatic polyurethane base lenses are disclosed in EP-A-0 329 389.

### THE PRESENT INVENTION

The present invention provides a stick-on or press-on lens as defined in claim 1 which is injection molded from an aliphatic thermoplastic polyurethane and which is characterized by magnifying or optically-corrective properties per se, that is, in itself, and which is adapted to be stuck on a normal sunglass or other plano lens, thus to be permanently but releasably secured thereto by virtue of its inherent, autogenous, or self-contained molecular surface adhesion properties, and thus to provide magnifying or corrective lenses and eyeglasses embodying the same directly and with a minimum of inconvenience and maximized economy.

The present invention also provides eyeglasses as defined in claim 6, and base lenses as defined in claims 8-11.

### THE DRAWINGS

Reference is now made to the drawings for a better understanding of the invention, wherein:

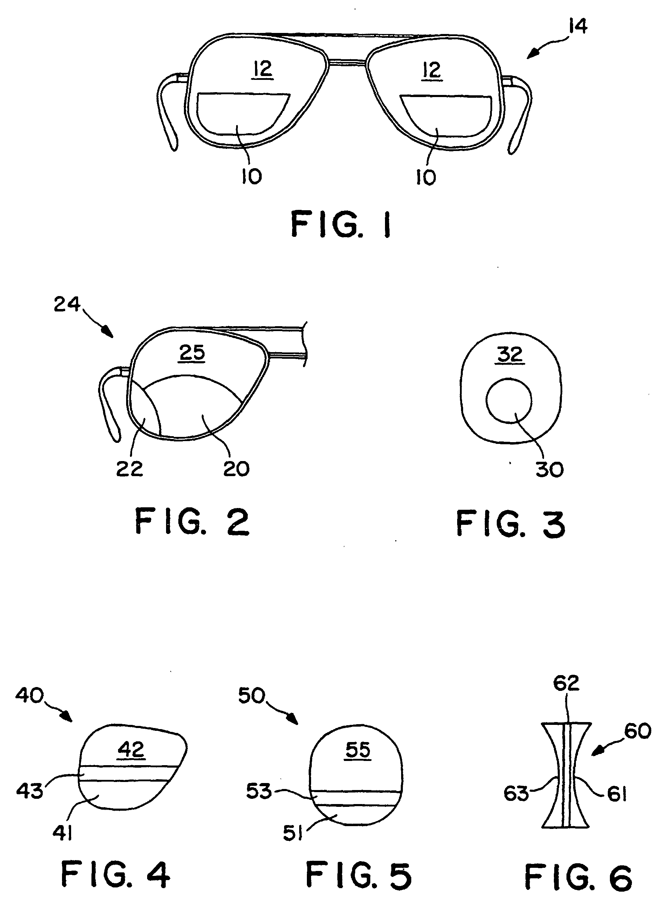

FIG. 1 depicts a pair of eyeglasses with typical base sunglass or plano lenses comprising, attached to the inner surfaces of each of the base lenses thereof by inherent molecular surface adhesion, a reader or magnifier lens of the present invention providing a 1 to 4 diopter magnification enhancement.
FIG. 2 depicts a partial eyeglass frame having a plano or sunglass base lens mounted therein and attached thereto, on the inner surface thereof by inherent molecular surface adhesion, a rounded bifocal bottom lens according to the present invention having a correction, representatively of +2 diopters. A further and separate lens according to the present invention is shown contiguous thereto secured by molecular surface adhesion to the upper part of the base lens, this lens unit or element representatively having a -1 diopter minification.
FIG. 3 depicts a normal plano or sunglass base lens having an essentially circular lens of the present invention attached thereto on the inside surface thereof by inherent molecular surface adhesion, the said essentially circular lens being designed for the correction of myopia or nearsightedness and having representatively a -2.00 diopter correction.
FIG. 4 shows another plano or sunglass base lens having a reader or magnifier lens according to the present invention attached to a surface thereof at the bottom thereof by inherent molecular surface adhesion and having representatively a +2.5 diopter magnification. Above the bottom lens is a second power lens according to the invention, integrally molded together with said first lens and representatively a +1.25 diopter magnification lens, whereas the upper portion of the base lens remains in its original form for adequate distance viewing.
FIG. 5 shows a more complex integral lens, wherein the base sunglass or plano lens has an integral lens of the invention comprising three (3) corrective lens segments adhered to the inner surface thereof by inherent molecular surface adhesion, the lower lens segment having a bifocal or reader correction of representatively +3.75, the second segment having a meso or intermediate correction of representatively +2.37 diopters, and the upper lens segment having a long range or distance correction of +1 diopter.
FIG. 6 is a cross-sectional view of a plano or sunglass base lens having attached thereto by inherent molecular surface adhesion two (2) separate lenses according to the present invention, one (1) on each side thereof, to correct astigmatism, the lenses having a twisted or rotated axis with relation to each other as is well known to be required for the correction of astigmatism.

### OBJECTS OF THE INVENTION

It is an object of the present invention to provide self-stick or press-on lenses adapted to be securely but releasably secured to a surface of a base sunglass lens or piano lens by inherent molecular surface adhesion between the lens of the invention and the base sunglass or piano lens to which affixed and which are characterized by built-in or inherent magnifying and/or corrective characteristics, so that a pair of reader or corrective eyeglasses can readily be prepared by adhering one or more lenses of the present invention to one or more surfaces of the base sunglass and/or plano lenses originally present therein. It is a further object of the present invention to provide in a simple, facile, and economical manner various types of composite magnifying or optically-corrective lenses utilizing the lenses provided by the present invention by adhering them to base plano and/or sunglass lenses in the manner just set forth. It is another object of the present invention to provide such lenses of the present invention from aliphatic thermoplastic polyurethanes. A still further object of the present invention is to provide such lenses according to the present invention which are injection molded and which possess excellent optical clarity as well as the necessary autogenous or inherent molecular surface adhesion characteristics. Additional objects will become apparent hereinafter and still further objects of the invention will be readily apparent to one skilled in the art to which this invention appertains.

### SUMMARY OF THE INVENTION

The invention, then, comprises the following, inter alia, singly or in combination:

A magnifying or corrective injection-molded aliphatic thermoplastic polyurethane optical lens, comprising built-in magnifying or corrective optical characteristics and adapted to be securely but releasably secured to the surface of a sunglass or plano base lens by inherent molecular surface adhesion characteristics of the molded aliphatic polyurethane lens itself;
a plano or sunglass base lens comprising adhered to the surface thereof such an injection-molded aliphatic polyurethane lens; and
eyeglasses comprising a frame incorporating therein such a lens.

Also, such an optical lens of molded polyurethane made from an aliphatic diisocyanate and an aliphatic polyol; such an
optical lens wherein said diisocyanate comprises a cycloaliphatic diisocyanate; such an
optical lens wherein said polyol comprises a diol or a mixture of a diol and a polyol having more than two hydroxyl groups; such an
optical lens wherein said diisocyanate comprises dodecahydro-MDI or dodecahydro-diphenylmethylene-p,p'-diisocyanate; and a
plano or sunglass base lens comprising adhered to the surface thereof such an injection-molded aliphatic polyurethane lens; and such a
plano or sunglass base lens comprising adhered to the surface thereof such an injection-molded aliphatic polyurethane lens in place in a spectacle frame.

Moreover, such a polyurethane lens which comprises a plurality of magnifying or corrective segments combined in an integral or unitary lens and a base lens comprising the same adhered thereto; such a
lens, wherein the base lens comprises a plurality of magnifying or corrective polyurethane lenses, at least one on each surface of said base lens; such a
lens, wherein the base lens comprises a plurality of magnifying or corrective polyurethane lenses on the same surface of said base lens; such a
lens, wherein the base lens comprises a plurality of magnifying or corrective polyurethane lenses on the same surface of said base lens and in contiguous relationship to each other; and such a
lens, wherein the base lens comprises on a surface thereof a plurality of magnifying or corrective polyurethane lens segments combined in an integral or unitary lens.

### Materials of Construction

Materials of construction, of the lenses of the invention having the built-in magnification or corrective characteristics and also characterized by molecular surface adhesion characteristics whereby they may be readily and securely but releasably secured to a surface of a plano or sunglass lens by molecular surface adhesion characteristics, are aliphatic thermoplastic polyurethanes which are provided in granular or powder form and which are injection molded according to normal injection-molding procedure in normal injection molding apparatus using variable mold cavities as further described hereinafter under "Examples". The materials employed and identified as aliphatic thermoplastic polyurethanes may be polyether based or polyester based, and the Morthane® line of polyether-based and polyester-based aliphatic thermoplastic polyurethanes are particularly suitable for the purposes of the present invention. These are obtained from Morton International, Inc., Seabrook, New Hampshire, and include Morthane PE199-100, PE193-100, PE192-100, and PN3429-100, by way of illustration but not by way of limitation. These polymers are characterized by excellent resilience, good low temperature flexibility, and superior color stability, outstanding UV stability, and optical clarity. They are likewise particularly well-suited for injection molding. Their excellent resilience, toughness, abrasion resistance, and hydrolytic stability is noteworthy. Particularly valuable for purposes of the present invention is their superior optical clarity. Necessary melt temperatures can be selected by one skilled in the injection molding art, ranging from 358°C (390°F). for the polyester-based PN3429-100, to approximately 120-130°C. for PE192-100, approximately 110-120°C. for PE193-100, and 65-130°C. for PE199-100. The product specification and data sheets for these products, four (4) pages, are attached hereto as Appendix A.

By way of further information, these products are polyurethane reaction products of an aliphatic diisocyanate and an aliphatic polyol. Essential to the operativeness of these polyurethane products is that they produce upon molding a clear see-through non-haze light-stable injection-molded lens product of exceptional optical clarity, which incorporates all of the characteristics as provided in the mold surface, but which yet are sufficiently self-adhering because of their autogenous or inherent molecular surface adhesion characteristics.

As will be noted from the attachments, the polyurethane thermoplastics especially suited for employment as materials of construction of the lenses or optical elements according to the present invention embody those isocyanate (NCO) components which are characteristically aliphatic. Hylene W from DuPont, which is MDI or methylene diisocyanate having twelve (12) additional hydrogen atoms, therefore being characteristically aliphatic, namely, cycloaliphatic in nature, and similar diisocyanates, are especially suitable. For polyethers in the PE series the active-hydrogen containing ingredient may be an approximately 1,000 molecular weight backbone polytetramethylene glycol, or a polyol mixture which comprises both a diol and a polyol having more than two (2) hydroxy groups, such as a glycol and a triol, e.g., glycerol or trimethylolpropane. Other normal and usual variations in the polyether component may be employed according to the skill of the art. As to the polyester series, an approximately 1,000 molecular weight polyester embodying a dibasic acid such as adipic or glycolic acid may be employed, the ester being made by esterifying the acid as with ethylene glycol. Polyethylene glycol or propylene glycol or polypropylene glycol may be employed, at least in part, so long as the molecular weight does not substantially exceed approximately 1,000 for the polyester employed.

As is conventional in the art, chain extenders may be employed and when employed are advantageously short-chain diols such as ethane diol, propane diol, butane diol, and the like, so long as the aliphatic nature of the polyurethane thermoplastic resulting from the combination of the active-hydrogen-containing component and the diisocyanate remains essentially aliphatic in nature. As already mentioned, a preferred isocyanate is Hylene W from duPont which has the technical name dodecahydro-MDI or dodecahydro-diphenylmethylene-p, p'-diisocyanate, which is in fact one of a variety of cycloaliphatic diisocyanates which may be advantageously employed in producing starting powders or granules of the aliphatic thermoplastic polyurethane which are employed for injection molding using suitable molds and mold cavities for production of lenses or optical elements according to the present invention as follows in more detail hereinafter. Other equivalent isocyanate and active-hydrogen-containing polyurethane-producing reactants can of course be employed so long as the essentially aliphatic thermoplastic polyurethane nature of the starting powders or granules is maintained.

### The Base Lens

The base lens may be any plano lens, that is, a lens without any correction, with or without tint or coloration as is commonly provided to reduce the passage of light and especially UV light therethrough, herein referred to as a "sunglass lens" or "sunglasses lenses". Whether the base lens is perfectly flat or somewhat arcuate or curved is immaterial, inasmuch as the lenses of the present invention, being somewhat flexible or resilient, will accept and adhere to slight curvatures and, moreover, since any curvatures of base lenses which lenses of the invention will not accept by virtue of their flexibility or resilience can be provided in the lens itself by incorporation of such curvature in the mold cavity should such be desirable in a particular case.

### The Lens of the Present Invention

The self-adhering lens of the present invention may provide any type of magnification, as in a "reader" lens, or any kind of a corrective lens, as for nearsightedness, farsightedness, or combinations thereof, for correction of myopia, hyperopia or presbyopia, astigmatism, or the like, whether molded separately in separate mold cavities or as a unitary or integral lens in a single mold cavity, all as will be apparent to one skilled in the art.

According to the present invention, a lens of the type provided according to the present invention, when a reader or magnification type, may have for example a power of +1.0d, 1.5d, 2.0d, 2.5d, 3.0d, 3.75d, or even up to 4.0d, the "d" standing for diopters, approximately +2.5d being usual and generally satisfactory for incorporation into a reader-type lens by attachment of a lens of the invention to the inner surface of a sunglass lens or a plano lens.

According to the present invention, there is no problem in making adjustments or changes in correction of a lens according to the present invention from lens to lens, or from eye to eye, it being entirely possible by simple redesign of the lens surfaces, as is now current practice in normal optical lens production. In the present case, it is only necessary to alter the mold surface, for example to provide a lower reader lens of between about +3.25 and +3.75d, a +3.25 diopter being for example suitable for the right lens and +3.75d for example being suitable for the left lens; with a meso or intermediate lens of +1.87 diopters for the right eye and a magnification of +2.37 diopters for the left eye, and with an upper lens portion being approximately a +.50 or one-half diopter for both lenses, that is, for the lenses for both the left and the right eyes. For the meso correction, one-half of the total of the top and bottom corrections is generally acceptable, that is, if the correction in the upper portion of the lens is +.5 or one-half diopter and in the lower portion of the lens is +2.75 diopters, then the total is +3.25 diopters, and the meso or intermediate power is generally about one-half of this amount or approximately +1.75 diopters. Such multi-power lenses may be provided as an integral unit or, if desired, in individual segments having 2 or 3 separate parts, as may be most convenient. When lenses of the type as provided by the present invention become widely commercially available, it is anticipated that different lens portions or segments may be provided separately, so that they may be combined on a base lens to produce a desired magnification or correction on either the right eye or the left eye or both for a particular party in need of a plurality of optical corrections.

### DETAILED DESCRIPTION OF THE INVENTION

The following examples are given by way of illustration only and are not to be construed as limiting.

Normal injection molding apparatus is provided whereby the polymer to be molded into a finished lens having polished surfaces corresponding to the surfaces of the mold cavity is introduced in normal manner. The feed portion of the apparatus is maintained at a preset temperature which is sufficient to melt the polymer employed during the course of its progress within the feed portion of the injection molding apparatus by the time it reaches the mold cavity itself. The polymer, which is fed to the injection molding apparatus in powder or granular form, is ordinarily metered into the apparatus from a funnel, in which it is thoroughly dried, whereafter the polymer is rammed by pressure, i.e., injected, into the mold cavity of the injection molding apparatus. The feed portion of the apparatus comprises the usual cylinder and corresponding plunger or screw which turns at a predetermined rate to progress or move the polymer powder or granules to the preset temperature and into a molten condition at the end of the feed and by the time it reaches the mold cavity. The mold cavity is chilled with circulating water. The mold is closed for approximately 18 seconds and thereafter opened, whereafter the lens as molded in the mold cavity falls out with an insignificant and hardly-discernible parting line, thus providing a finished lens which may be replicated continuously and which incorporates all characteristics of the mold cavity, which appear on the surface of the finished lens or optical element, which has perfect optical clarity and excellent resilience, toughness, abrasion resistance, and hydrolytic stability. As already stated, each lens incorporates on the surfaces thereof all of the characteristics of the mold cavity, so that replicates may be produced rapidly and conveniently according to well-known and established injection molding technique of the type already employed for the production of camera lenses or even plastic eyeglasses themselves, which latter however are generally produced by grinding rather than by molding. Thus, the aliphatic thermoplastic polyurethane in granular or powder form, as previously described, is introduced in the manner fully set forth in the foregoing into the existing injection molding apparatus and in molten state into the die or mold cavity thereof having a predetermined polished surface and, after a suitable time in the mold cavity, expelled therefrom by opening the mold according to usual procedure. For further disclosure as to standard injection molding apparatus, practice, and technique, reference is made to "A CONCISE GUIDE TO PLASTICS" by Herbert R. Simonds, Reinhold Publishing Corporation, New York, N.Y., 1960 printing at pages 179-181 and Gudermuth, in Modern Plastics Encyclopedia, McGraw-Hill Inc., New York, N.Y., 1975-1976 Edition (Volume 52, Number 10A) at pages 331-348.

Referring now to the drawings and the Figures thereof with greater particularity, the lens or optical element of FIG. 1 is a reader or magnifier lens 10 of 1 to 4 diopter magnification. The lens product of the invention, upon retrieval from the mold, is found to be of superior optical clarity and two such identical lenses are affixed in the manner indicated in FIG. 1 to the inner surfaces of the lenses 12 of a pair of plano sunglasses or a pair of uncolored plano glasses 14, thereby to provide readily, conveniently, and economically a pair of reader or magnification glasses, the reader lens 10 of the present invention adhering to the inner surface of the plano or sunglass base lens 12 by its inherent molecular surface adhesion characteristics and being removably secured thereto, i.e., securely affixed thereto by mere finger pressure alone and removable therefrom only with considerable effort as by the careful application of a prying tool such as a small screwdriver along an edge thereof.

As shown in FIG. 2, the lens or optical element of the present invention is in the form of a rounded bifocal lens 20, having a correction say of +2 diopters, which is adhered to the surface of a sunglass or plano lens 22 in the same manner by finger pressure alone to provide a suitable bifocal corrective lens which, as shown in FIG. 2, can readily be inserted into the frame of a normal and usual pair of glasses 24. As also shown in FIG. 2, a further upper corrective lens 25 can also be provided by molding in a separate mold cavity a suitably sized and conformed lens having say a -1 diopter minification correction which can then be adhered in the same manner contiguously to lens 20 to the upper portion of the plano or sunglass lens 22.

As shown in FIG. 3, a simple round or oval lens 30 can be provided in the same manner to correct nearsightedness or myopia, and in such case the lens correction will be of a minus(-) diopter in power, say -2.00 diopters. As shown, it is adhered by its inherent molecular surface adhesion characteristics to the inner or outer surface of plano or sunglass lens 32.

Referring now to FIG. 4, an integral lens 40 having two separate phases or powers is provided in the same manner by providing a mold cavity having the necessary conformation and dimensions and injection molding a selected aliphatic thermoplastic polyurethane therein according to previously-described procedure. In this manner a self-adhering lens 40 having a bottom portion 41 of say +2.5 for a reader lens and an intermediate portion 43 having a power of say +1.25 diopters is readily provided and applied to the surface of a correspondingly contoured and dimensioned plano or sunglass lens 42 to produce the finished lens as shown in FIG. 4, the uppermost portion of which remains in its original and unaltered plano state.

When a lens having three separate power segments is desired or required, this can be effected by providing a lens 50 of the type shown in FIG. 5, wherein the bifocal or reader lower portion 51 thereof has a correction say of +3.75 diopters, the meso or intermediate segment 53 has a correction of say +2.37 diopters, and the long range or distance correction segment 55 at the top thereof is of an approximately +1 diopter power. Upon adherence of the lens 50 according to the present invention to the inner surface of a standard correspondingly-sized plano or sunglass lens (not visible), a lens of the type shown in FIG. 5 is provided.

As to the lenses of FIGS. 4 and 5, it is of course quite possible, as already indicated, that the two segments 41 and 43 of the lens 40 of FIG. 4 and the three segments 51, 53, and 55 of the lens 50 of FIG. 5 can be molded in separate mold cavities and then individually but contiguously affixed to the inner surface of the plano or sunglass lens, as done for separate lens segments 20 and 25 in FIG. 2, to produce an effect which is identical to the effect produced by the unitary lenses or optical elements shown in FIGS. 4 and 5, although the individual segments of the lenses 40 and 50 in such case require individual or separate molds and molding.

As shown in the cross-section of FIG. 6, it is even possible according to the present invention to provide a lens 60 comprising a plurality of lens elements of the invention for affixation to opposite sides of a plano or sunglass lens by inherent molecular surface adhesion characteristics of two separate lenses which, when twisted on their axes, can be employed to correct astigmatism and to provide for the astigmatic patient a focused correction simply by rotating or twisting the axes of the respective lens elements 61 and 63 on either side of the plano or sunglass lens 62 adequately and properly with respect to each other.

It is thus seen that novel and unique lenses or optical elements are provided by the present invention, which are injection molded of aliphatic thermoplastic polyurethane materials and therefore characterized by molecular surface adhesion characteristics which enable them to be pressed-on or stuck to the surface of a normal plano or sunglass lens and thus to be securely but releasably secured thereto, and which lenses, being molded, can be provided with almost any desired type of magnification and corrective characteristics, so as to provide a ready method and means of producing reader and corrective lenses for mounting in corresponding frames of usual type, but with corresponding facility and economy. The lenses of the invention may take various forms and shapes and configurations, as already pointed out, and may be readily and conveniently mounted on either surface of a flat or curved plano or sunglass lens as desired, in each case to provide a final composite lens having the desired characteristics of magnification or correction. The single or multi-power lenses of the invention, and the corresponding portion of composite lenses embodying the same, are characterized by excellent resilience, toughness, and abrasion resistance, and above all by superior optical clarity and excellent hydrolytic stability. Accordingly, all of the objectives of the present invention have thereby been attained.

It is to be understood that the present invention is not to be limited to the exact details of operation, or to the exact compounds, compositions, methods, procedures, or embodiments shown and described, as various modifications and equivalents will be apparent to one skilled in the art, wherefore the present invention is to be limited only by the full scope which can be legally accorded to the appended claims.

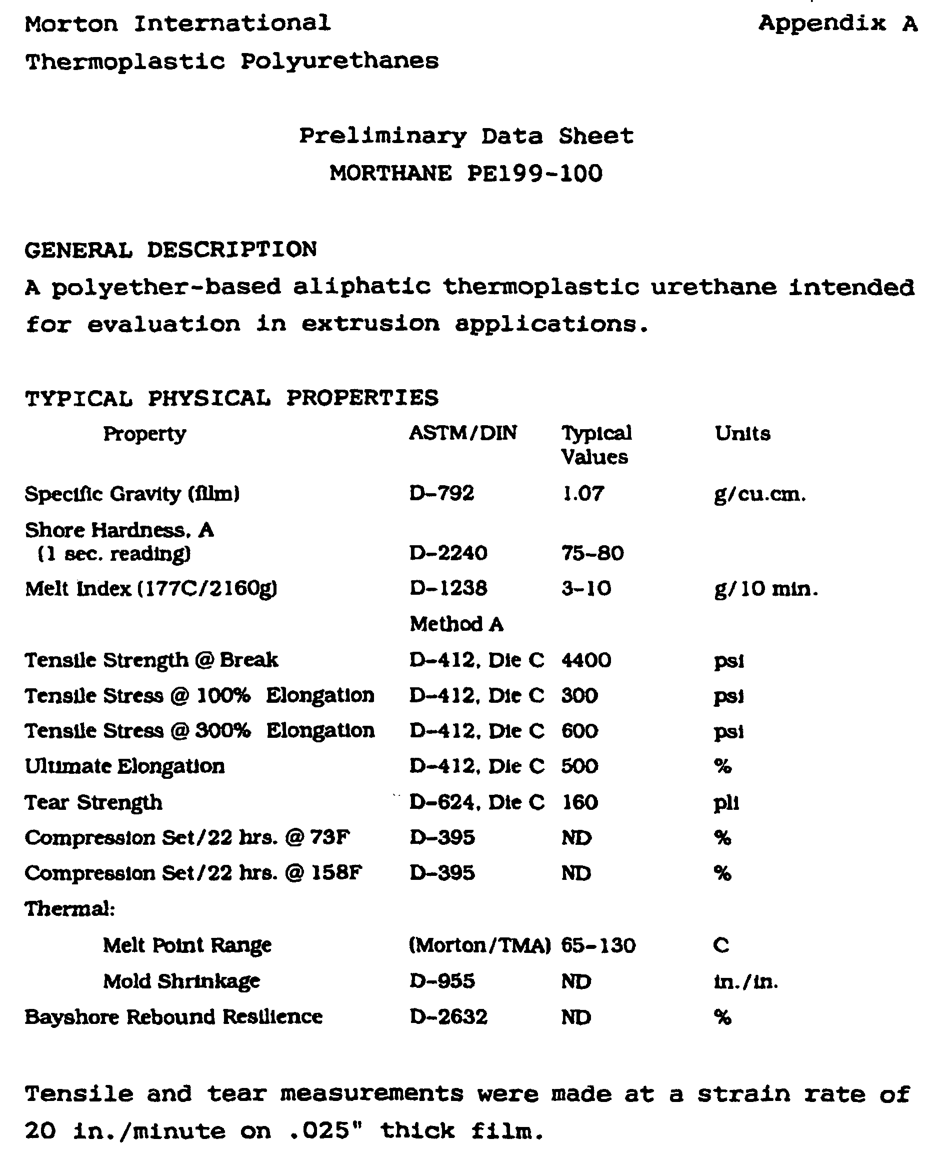

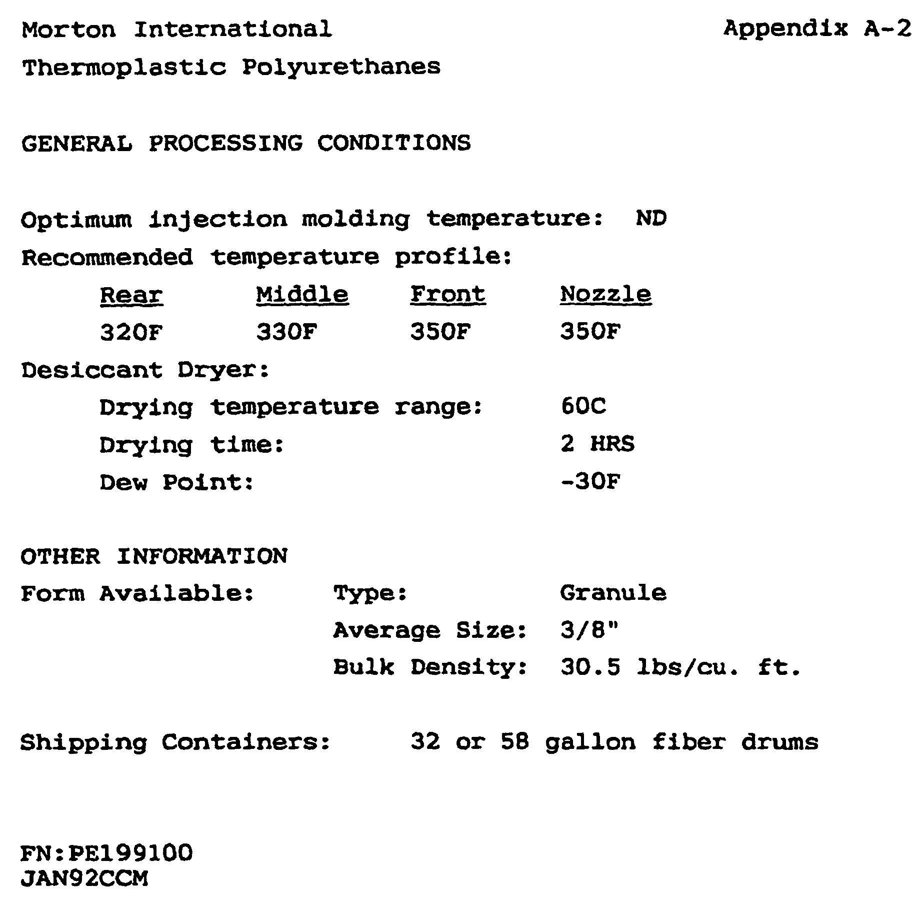

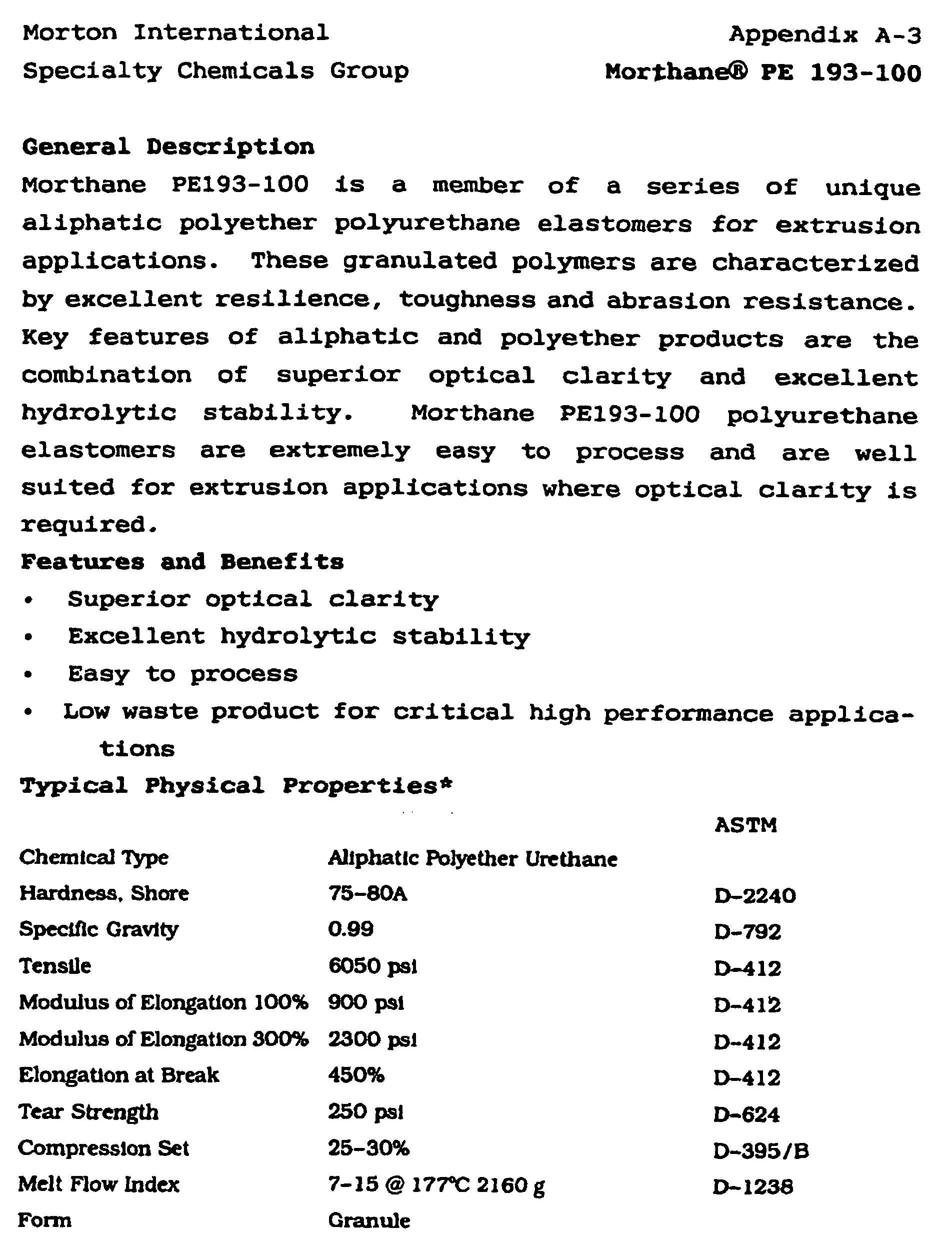

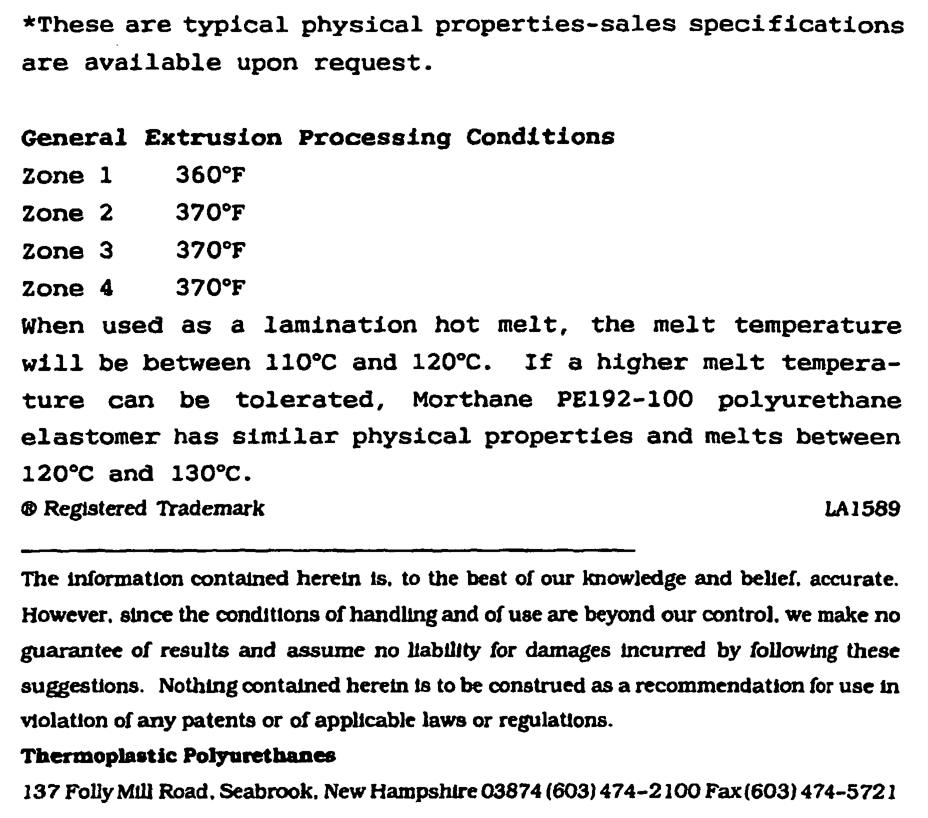

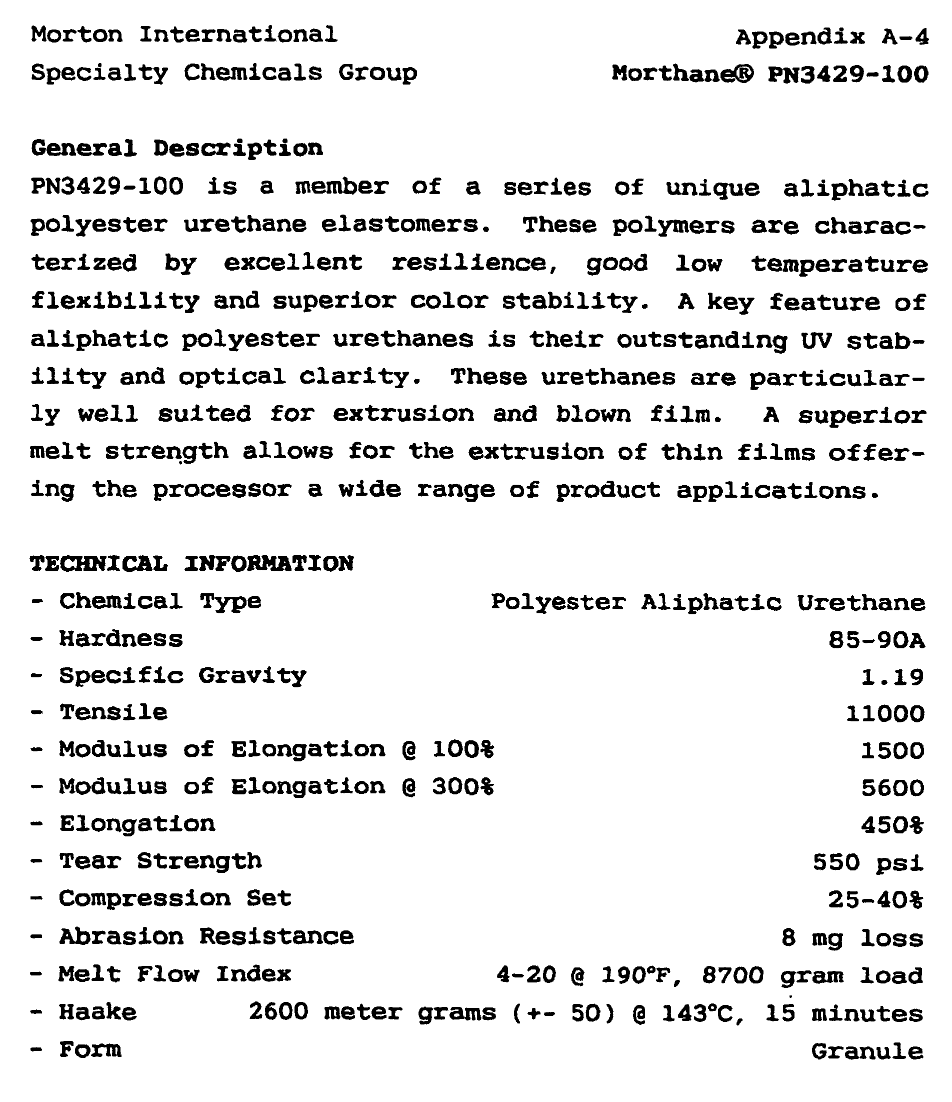

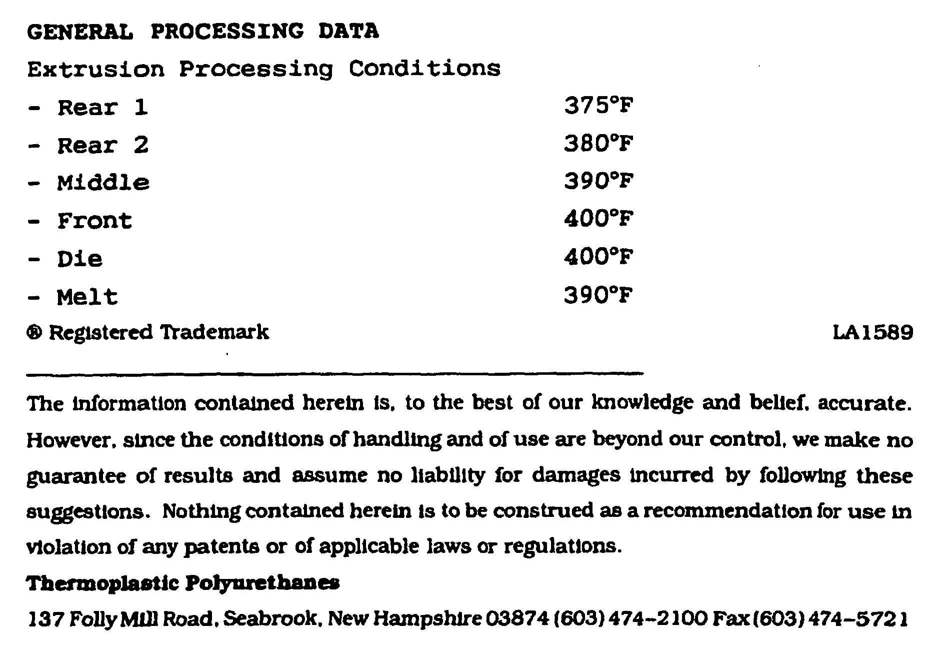

## Claims

1. A magnifying or corrective elastomeric optical lens (10) having built in magnifying or corrective characteristics and made from an elastomer such as to be capable to be securely but releasably secured to the surface of a base lens by inherent molecular surface adhesion characteristics of the elastomeric lens itself, **characterized in that** it is made from an injection-molded aliphatic thermoplastic polyurethane.

2. The optical lens of claim 1, wherein the aliphatic thermoplastic polyurethane is made from an aliphatic diisocyanate and an aliphatic polyol.

3. The optical lens of claim 2, wherein the diisocyanate comprise a cycloaliphatic diisocyanate.

4. The optical lens of claim 2, wherein said diisocyanate comprises dodecahydro-MDI or dodecahydro-diphenil-p,p'-diisocyanate.

5. The optical lens of anyone of the claims from 2 to 4, wherein the aliphatic polyol comprises a diol or a mixture of a diol and a polyol having more than two hydroxyl groups.

6. Eyeglasses **characterised by** comprising a frame incorporating therein a base lens comprising adhered to a surface an optical lens according to anyone of the claims from 1 to 5.

7. An optical lens as claimed in anyone of claims 1 to 5, wherein the optical lens comprises a plurality of magnifying or corrective segments (41-43;51-53) combined in sequence in a single optical lens.

8. A base lens **characterised by** comprising adhered to the surface thereof an optical lens according to anyone of claims 1-5.

9. A base lens **characterised by** comprising a plurality of optical lenses (61, 63) as claimed in anyone of claims 1 to 5, having at least one optical lens adhered on each surface of said base lens.

10. A base lens **characterised by** comprising adhered to the surface thereof a plurality of optical lenses as claimed in anyone of claims 1 to 5, wherein the optical lenses are adhered on the same surface of the base lens.

11. A base lens **characterised by** comprising adhered to the surface thereof a plurality of optical lenses (41-43; 51-53) as claimed in anyone of claims 1 to 5, wherein the optical lenses are in contiguous relationship to each other.

## Patentansprüche

1. Vergrößernde oder korrigierende, elastomere, optische Linse (10), **dadurch gekennzeichnet, dass** diese aus spritzgegossenem, aliphatischen, thermoplastischen Polyurethan hergestellt ist, eingebaute vergrößernde oder korrigierende Eigenschaften aufweist und aus einem Elastomer hergestellt ist, so dass sie in der Lage ist, fest aber entfernbar an der Oberfläche einer Basislinse durch inhärente, molekulare Oberflächenadhersionseigenschaten der elastischen Linse selbst befestigt zu werden.

2. Optische Linse nach Anspruch 1, **dadurch gekennzeichnet, dass** das aliphatische, thermoplastische Urethan aus einem aliphatischen Diisocyanat und einem aliphatischen Polyol hergestellt ist.

3. Optische Linse nach Anspruch 2, **dadurch gekennzeichnet, dass** das Düsocyanat cycloaliphatisches Diisocyanat aufweist.

4. Optische Linse nach Anspruch 2, **dadurch gekennzeichnet, dass** das Düsocyanat Dodecahydro-MDI oder Dodecahydro-diphenyl-p,p'-diisocyanat aufweist.

5. Optische Linse nach einem der Ansprüche 2 bis 4, **dadurch gekennzeichnet, dass** das aliphatische Polyol ein Diol oder eine Mischung aus einem Diol und einem Polyol mit mehr als zwei Hydroxylgruppen aufweist.

6. Brille, **dadurch gekennzeichnet, dass** diese einen Rahmen aufweist, der darin eine Basislinse aufnimmt, welche, an eine Oberfläche anhaftend, eine optische Linse nach einem der Ansprüche 2 bis 5 aufweist.

7. Optische Linse, wie in einem der Ansprüche 1 bis 5 beansprucht, **dadurch gekennzeichnet, dass** die optische Linse eine Vielzahl an vergrößernden oder korrigierenden Segmenten (41 - 43; 51 - 53) aufweist, die in einer Abfolge in einer einzelnen optischen Linse kombiniert sind.

8. Basislinse, **dadurch gekennzeichnet, dass** diese anhaftend an die Oberfläche davon eine optische Linse nach einem der Ansprüche 1 bis 5 aufweist.

9. Basislinse, **dadurch gekennzeichnet, dass** diese eine Vielzahl von optischen Linsen (61, 63), wie in einem der Ansprüche 1 bis 5 beansprucht, aufweist, wobei zumindest eine optische Linse an jeder Oberfläche der Basislinse anhaftet.

10. Basislinse, **dadurch gekennzeichnet, dass** diese anhaftend an die Oberfläche davon eine Vielzahl optischer Linsen, wie in einem der Ansprüche 1 bis 5 beansprucht, aufweist, wobei die optischen Linsen an der selben Oberfläche der Basislinse anhaften.

11. Basislinse, **dadurch gekennzeichnet, dass** diese anhaftend an die Oberfläche davon eine Vielzahl optischer Linsen (41 - 43; 51- 53), wie in einem der Ansprüche 1 bis 5 beansprucht, aufweist, wobei die optischen Linsen in einer benachbarten Beziehung zueinander stehen.

## Revendications

1. Verre optique élastomère grossissant ou correcteur (10) comportant des caractéristiques grossissantes ou correctrices intégrées et réalisé à partir d'un élastomère de façon à pouvoir être fixé de façon solide mais libérable à la surface d'un verre de base par des caractéristiques d'adhérence superficielle moléculaire inhérentes au verre élastomère lui-même, **caractérisé en ce qu'**il est réalisé à partir d'un polyuréthane thermoplastique aliphatique moulé par injection.

2. Verre optique selon la revendication 1, **caractérisé en ce que** le polyuréthane thermoplastique aliphatique est réalisé à partir d'un diisocyanate aliphatique et d'un polyol aliphatique.

3. Verre optique selon la revendication 2, **caractérisé en ce que** le diisocyanate comprend un diisocyanate cycloaliphatique.

4. Verre optique selon la revendication 2, **caractérisé en ce que** ledit diisocyanate comprend du dodécahydro-MDI ou du dodécahydro-diphényl-p,p'-diisocyanate.

5. Verre optique selon l'une quelconque des revendications 2 à 4, **caractérisé en ce que** le polyol aliphatique comprend un diol ou un mélange d'un diol et d'un polyol comportant plus de deux groupes hydroxyles.

6. Lunettes selon l'une quelconque des revendications 1 à 5, **caractérisées en ce qu'**elles comprennent une monture intégrant un verre de base comprenant, adhérant à une surface, un verre optique.

7. Verre optique selon l'une quelconque des revendications 1 à 5, **caractérisé en ce que** le verre optique comprend une pluralité de segments grossissants ou correcteurs (41 à 43 ; 51 à 53) combinés en séquence dans un seul verre optique.

8. Verre de base selon l'une quelconque des revendications 1 à 5, **caractérisé en ce qu'**il comprend un verre optique adhérant à la surface de celui-ci.

9. Verre de base selon l'une quelconque des revendications 1 à 5, **caractérisé en ce qu'**il comprend une pluralité de verres optiques (61, 63) comportant au moins un verre optique adhérant à chaque surface dudit verre de base.

10. Verre de base selon l'une quelconque des revendications 1 à 5, **caractérisé en ce qu'**il comprend, adhérant à sa surface, une pluralité de verres optiques, dans lequel les verres optiques adhèrent à la même surface du verre de base.

11. Verre de base selon l'une quelconque des revendications 1 à 5, **caractérisé en ce qu'**il comprend, adhérant à sa surface, une pluralité de verres optiques (41 à 43 ; 51 à 53), dans lequel les verres optiques sont en relation contiguë les uns par rapport aux autres.
